# DEMANDE DE BREVET EUROPEEN

(11) **EP 2 857 070 A1**
(43) Date de publication de la demande: **08.04.2015**
(21) Numéro de dépôt: 14187773.8
(22) Date de dépôt: 06.10.2014
(51) Int. Cl.: A62B 35/00, F16B 45/02, A62B 1/14

(54) **Dispositif de liaison deplaçable et amovible le long d'une corde**

(30) Priorité: 07.10.2013 FR 1359722
(71) Demandeur: Etablissements Simond, 74310 Les Houches (FR)
(72) Inventeur: Lefebvre, Patrick, 74400 CHAMONIX MONT BLANC (FR); Mansuy, Mathieu, 88250 LA BRESSE (FR); Molliex, Romain, 74950 SCIONZIER (FR)
(74) Mandataire: Poncet, Jean-François

(57) **Abrégé**

Le dispositif de liaison (1) comprend un connecteur d'accrochage (5) en anneau ouvert (5a) à doigt de fermeture (5b), solidarisé en permanence par une liaison articulée ou par une liaison rigide à un appareil de liaison (4) apte à assurer la liaison sélective à une corde (3). La manipulation du dispositif de liaison est ainsi facilitée, et on évite les risques d'un mauvais positionnement relatif du connecteur d'accrochage (5) et de l'appareil de liaison (4).

## Description

La présente invention concerne les dispositifs permettant d'assurer, entre une corde et un point fixe ou un utilisateur, une liaison réglable, déplaçable et amovible le long de la corde.

Un tel dispositif peut être utilisé pour monter ou descendre le long d'une corde elle-même accrochée à un point fixe, ou pour laisser filer et retenir de façon réglable et sélective une corde par rapport à un point fixe ou à un utilisateur.

Un tel dispositif de liaison réglable doit en principe pouvoir être adapté de manière amovible sur la corde, et doit pouvoir être connecté de manière amovible à un point fixe.

Pour cela, les dispositifs de liaison réglable connus comportent deux éléments distincts, à savoir un appareil de liaison réglable et un connecteur d'accrochage, éléments qui ont des fonctions respectives qui diffèrent sensiblement l'une de l'autre.

Un exemple de tel dispositif de liaison réglable connu est décrit dans le document JP 2011-200640 A.

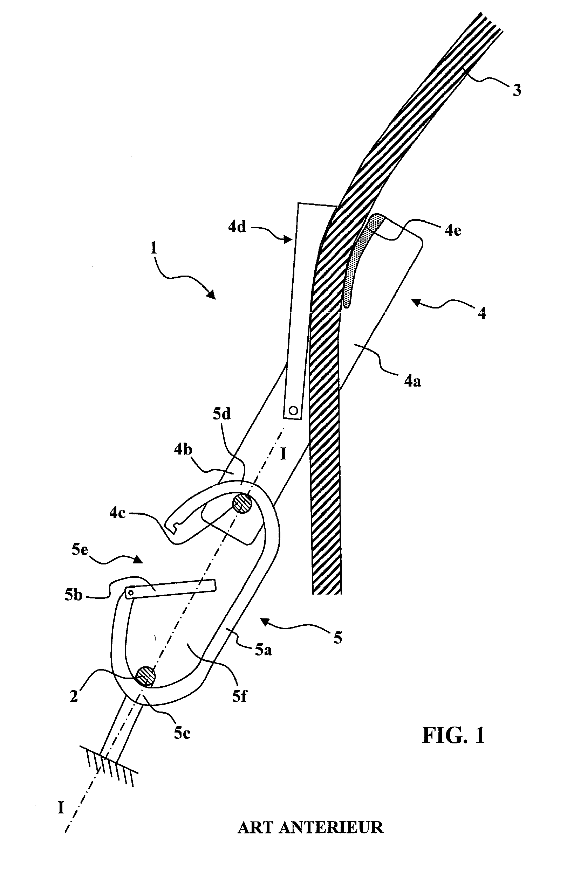

Pour clarifier l'exposé du problème qui est à la base de la présente invention, on a illustré schématiquement sur la figure 1 un tel dispositif de liaison réglable connu, à deux éléments distincts.

Ainsi, sur la figure 1, le dispositif de liaison 1 permet de relier un point fixe 2 à une corde 3, et comprend un appareil de liaison 4 et un connecteur d'accrochage 5.

L'appareil de liaison 4 permet une liaison sélective et réglable avec la corde 3, tandis que le connecteur d'accrochage 5 permet l'accrochage sélectif de l'appareil de liaison 4 au point fixe 2.

L'appareil de liaison 4, illustré très schématiquement, comporte un corps de liaison 4a dont une extrémité proximale 4b comporte des premiers moyens de liaison 4c pour sa liaison au connecteur d'accrochage 5, et comporte des seconds moyens de liaison à organe presseur 4d et à surface d'appui 4e aptes à assurer la liaison sélective et réglable du corps de liaison 4a sur la corde 3.

Le connecteur d'accrochage 5 comporte un corps de connecteur 5a en anneau ouvert et un doigt de fermeture 5b. Le corps de connecteur 5a a une zone d'extrémité proximale 5c et une zone d'extrémité distale 5d opposées l'une à l'autre. Le corps de connecteur 5a comprend, entre ses deux zones d'extrémité 5c et 5d, une ouverture latérale 5e. Le doigt de fermeture 5b est articulé sur le corps de connecteur 5a et est mobile entre d'une part une position ouverte autorisant le passage vers et hors d'un espace intérieur 5f du corps de connecteur 5a par son ouverture latérale 5e et d'autre part une position fermée s'opposant au passage vers et hors de l'espace intérieur 5f du corps de connecteur 5a par son ouverture latérale 5e.

Pour utiliser un tel dispositif de liaison 1, l'opérateur doit en principe tout d'abord engager la corde 3 dans l'appareil de liaison 4, entre la surface d'appui 4e et l'organe presseur 4d. L'opérateur doit ensuite relier l'appareil de liaison 4 au point fixe 2 en passant le premier moyen de liaison 4c dans le connecteur d'accrochage 5, et en passant le point fixe 2 dans le connecteur d'accrochage 5. L'opérateur doit alors refermer le doigt de fermeture 5b et réaliser son verrouillage correct, par exemple par vissage d'une bague, pour garantir la liaison constante entre le point fixe 2 et le dispositif de liaison 1.

Une première difficulté est que, bien souvent, l'opérateur omet de vérifier que le doigt de fermeture 5b est correctement verrouillé en position de fermeture, et il y a alors un risque d'ouverture du doigt de fermeture 5b, entraînant une probable rupture de la liaison entre le point fixe 2 et la corde 3.

Une seconde difficulté avec de tels dispositifs de liaison réglable connus est que le fonctionnement correct de l'appareil de liaison 4 nécessite de contrôler son orientation autour de l'axe longitudinal I-I, en particulier pour qu'une éventuelle incurvation de la corde 3 se trouve toujours dans un plan sensiblement vertical lors de l'utilisation. L'utilisateur doit pour cela prêter une attention permanente à l'orientation de l'appareil de liaison 4.

Une troisième difficulté avec de tels dispositifs de liaison réglable connus est que la liaison entre le point fixe 2 et la corde 3 nécessite plusieurs manipulations, pour adapter l'appareil de liaison 4 à la corde 3, pour adapter le connecteur d'accrochage 5 au point fixe 2, et pour adapter le connecteur d'accrochage 5 à l'appareil de liaison 4.

Un premier problème proposé par la présente invention est de concevoir un nouveau dispositif de liaison réglable permettant à la fois de réduire le nombre de manipulations pour la liaison entre un point fixe et une corde, et d'éviter les risques de mauvais positionnement de l'appareil de liaison.

Un deuxième problème proposé par la présente invention est de faciliter la manipulation du dispositif de liaison réglable lors des manoeuvres d'accrochage à un point fixe et à la corde.

Un troisième problème proposé par l'invention est d'augmenter la sécurité de la connexion en garantissant la fermeture et le verrouillage du connecteur d'accrochage.

Pour résoudre le premier problème ci-dessus, l'invention propose un dispositif de liaison déplaçable et amovible le long d'une corde, comprenant :
- un connecteur d'accrochage, ayant un corps de connecteur en anneau ouvert et un doigt de fermeture, le corps de connecteur ayant une zone d'extrémité proximale et une zone d'extrémité distale opposées l'une à l'autre et définissant entre elles une direction de résistance maximale selon laquelle le corps de connecteur est apte à supporter un effort de traction maximal, le corps de connecteur ayant entre ses deux zones d'extrémité une ouverture latérale à l'écart de la direction de résistance maximale, le doigt de fermeture étant articulé sur le corps de connecteur et mobile entre d'une part une position ouverte autorisant le passage vers et hors d'un espace intérieur du corps de connecteur par son ouverture latérale et d'autre part une position fermée s'opposant au passage vers et hors de l'espace intérieur du corps de connecteur par son ouverture latérale,
- un appareil de liaison, ayant un corps de liaison dont une extrémité proximale comporte des premiers moyens de liaison pour sa liaison au connecteur d'accrochage, ayant une surface d'appui apte à assurer une liaison sur la corde, et ayant un organe presseur mobile et adapté pour presser la corde de façon réglable contre la surface d'appui ;
   selon l'invention :
- l'appareil de liaison est solidarisé en permanence au connecteur d'accrochage et lui est relié par lesdits premiers moyens de liaison,
- lesdits premiers moyens de liaison sont conformés de façon à assurer en permanence la liaison et l'orientation axiale entre l'extrémité proximale de l'appareil de liaison et la zone d'extrémité distale du corps de connecteur.

Du fait que l'appareil de liaison est solidarisé en permanence au connecteur d'accrochage et lui est relié par les premiers moyens de liaison, on supprime la manipulation consistant à adapter le connecteur d'accrochage à l'appareil de liaison.

Du fait que les premiers moyens de liaison assurent en permanence l'orientation axiale de l'appareil de liaison à l'extrémité distale du corps de connecteur, et du fait que le corps de connecteur s'oriente nécessairement par rapport à un point fixe auquel il est accroché, par exemple le baudrier d'un utilisateur, lors de l'utilisation, l'appareil de liaison s'oriente nécessairement et automatiquement de façon appropriée par rapport à la corde, de sorte qu'il peut fonctionner correctement sans risque de blocage intempestif.

Selon un premier mode de réalisation, lesdits premiers moyens de liaison peuvent être une liaison articulée, par laquelle l'extrémité proximale de l'appareil de liaison est articulée en permanence sur la zone d'extrémité distale du corps de connecteur.

De préférence, lesdits premiers moyens de liaison peuvent être une liaison rigide entre l'extrémité proximale du corps de liaison et l'extrémité distale du corps de connecteur. Grâce à cette liaison rigide, l'appareil de liaison et le connecteur d'accrochage forment un ensemble unitaire à corps rigide commun formé du corps de liaison et du corps de connecteur. On facilite ainsi la préhension lors des manoeuvres d'accrochage à un point fixe et à une corde, ce qui résout le second problème mentionné ci-dessus. Simultanément, grâce à cette liaison rigide, on améliore encore l'orientation axiale automatique de l'appareil de liaison par rapport à la corde.

Dans le cas d'une telle liaison rigide entre l'appareil de liaison et le connecteur d'accrochage, pour résoudre le troisième problème mentionné ci-dessus d'augmenter la sécurité de la connexion en garantissant la fermeture et le verrouillage du connecteur d'accrochage, on peut avantageusement prévoir que :
- l'appareil de liaison comprend un organe de liaison articulé sur le corps de liaison et mobile entre d'une part une position écartée autorisant l'engagement latéral de la corde dans un intervalle transversal de passage de corde et d'autre part une position fermée interdisant la sortie latérale de la corde à l'écart de l'intervalle transversal de passage de corde,
- des moyens de verrouillage assurent le verrouillage sélectif de l'organe de liaison en position fermée,
- le doigt de fermeture du connecteur d'accrochage est sollicité par l'organe de liaison qui le maintient en position fermée lorsque l'organe de liaison est lui-même en position fermée, et qui interdit son déplacement vers sa position ouverte tant que l'organe de liaison est lui-même en position fermée.

Un tel dispositif de liaison réglable peut trouver diverses applications.

Selon une première application, l'appareil de liaison peut être un descendeur-assureur conformé pour assurer un freinage contrôlé le long de la corde.

Selon une seconde application, l'appareil de liaison peut être un assureur à corps tubulaire.

Selon une troisième application, l'appareil de liaison peut être un système de remontée sur corde permettant à un opérateur de remonter le long d'une corde.

Selon une quatrième application, l'appareil de liaison peut comprendre une poulie de roulage sur une corde.

D'autres objets, caractéristiques et avantages de la présente invention ressortiront de la description suivante de modes de réalisation particuliers, faite en relation avec les figures jointes, parmi lesquelles :
- la figure 1 illustre schématiquement un dispositif de liaison réglable selon l'art antérieur tel que discuté ci-dessus ;
- la figure 2 est une vue schématique illustrant un dispositif de liaison réglable selon un premier mode de réalisation de la présente invention ;
- la figure 3 est une vue schématique illustrant un dispositif de liaison réglable selon un second mode de réalisation de l'invention ;
- la figure 4 est une vue de face illustrant plus en détails une première réalisation d'un dispositif de liaison selon le second mode de réalisation, de type descendeur-assureur;
- la figure 5 est une vue de côté en coupe partielle selon le plan A-A illustrant le dispositif de liaison de la figure 4 ;
- les figures 6 à 8 illustrent en vue de côté trois étapes du fonctionnement du dispositif de liaison de la figure 4 ;
- les figures 9 et 10 illustrent en perspective deux autres réalisations d'un dispositif de liaison selon le second mode de réalisation, de type assureur à corps tubulaire ;
- les figures 11 et 12 illustrent en perspective deux autres réalisations d'un dispositif de liaison selon le second mode de réalisation, de type systèmes de remontée sur corde ; et
- les figures 13 et 14 illustrent en perspective une autre réalisation d'un dispositif de liaison selon le second mode de réalisation, de type poulie de roulage sur corde.

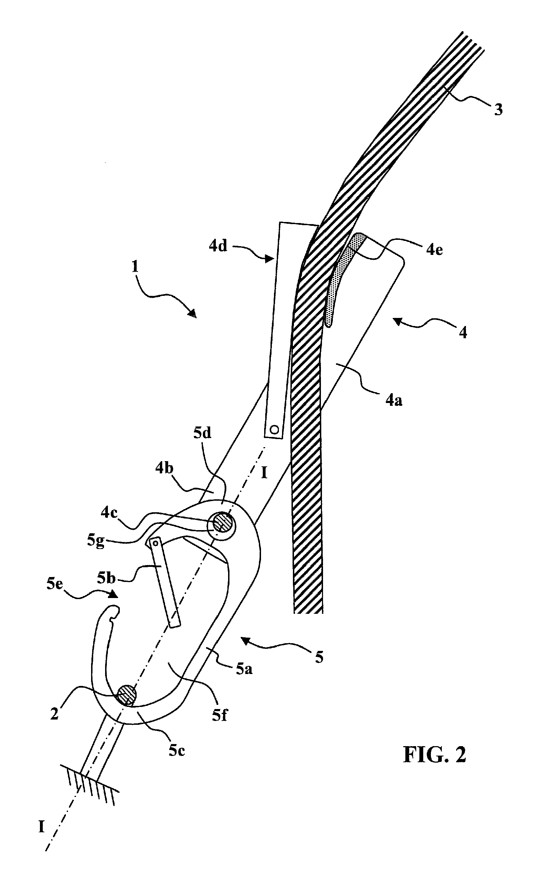

Dans le mode de réalisation illustré schématiquement sur la figure 2, un dispositif de liaison 1 réglable selon l'invention comprend un appareil de liaison 4 et un connecteur d'accrochage 5.

L'appareil de liaison 4, illustré très schématiquement, comporte un corps de liaison 4a à extrémité proximale 4b comportant un premier moyen de liaison 4c tel qu'une traverse illustrée en coupe.

L'appareil de liaison 4 comporte en outre des seconds moyens de liaison, illustrés sous forme d'une organe presseur 4d mobile articulé sur le corps de liaison 4a et adapté pour presser la corde 3 contre une surface d'appui 4e du corps de liaison 4a, de façon réglable et amovible selon la volonté de l'opérateur. L'appareil de liaison 4 réalise ainsi un freinage réglable sur la corde 3.

Le connecteur d'accrochage 5 comporte un corps de connecteur 5a et un doigt de fermeture 5b. Le corps de connecteur 5a se développe entre une zone d'extrémité proximale 5c et une zone d'extrémité distale 5d, et présente une ouverture latérale 5e que le doigt 5b vient combler en position de fermeture et que le doigt 5b laisse accessible en position d'ouverture. Le connecteur d'accrochage 5 illustré sur la figure 2 diffère de celui de la figure 1 en ce sens que la zone d'extrémité distale 5d comporte une lumière 5g traversée par les premiers moyens de liaison 4c en forme de traverse du corps de liaison 4a. De la sorte, les premiers moyens de liaison 4c sont en permanence reliés à la zone d'extrémité distale 5d du corps de connecteur 5a.

Dans les conditions d'utilisation, lors d'une traction exercée entre la corde 3 et le point fixe 2, c'est-à-dire lors d'un freinage ou d'un blocage exercé par l'appareil de liaison 4, le point fixe 2 vient se loger dans la zone d'extrémité proximale 5c du connecteur d'accrochage 5, et le connecteur d'accrochage 5 s'oriente automatiquement autour de l'axe longitudinal I-I, ce qui détermine simultanément l'orientation axiale de l'appareil de liaison 4 c'est-à-dire son orientation autour de l'axe longitudinal I-I, grâce à la liaison permanente entre le corps de connecteur 5a et l'appareil de liaison 4.

Du fait que le connecteur d'accrochage 5 est en permanence solidaire de l'appareil de liaison 4, l'opérateur n'a plus à se préoccuper de relier le connecteur 5 à l'appareil de liaison 4 lors de l'utilisation du dispositif de liaison 1. On réduit ainsi le nombre de manoeuvres nécessaires pour l'utilisation du dispositif de liaison 1, et donc les risques d'erreur ou d'accident.

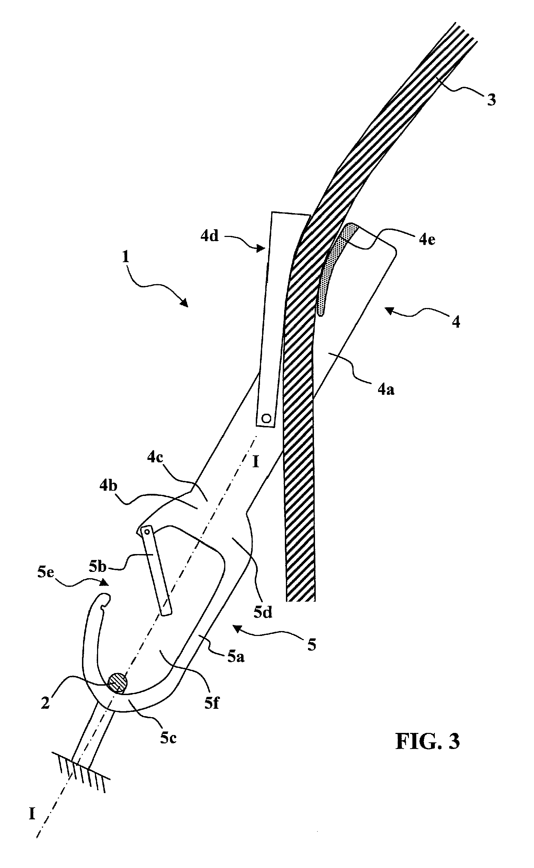

On considère ensuite le second mode de réalisation illustré schématiquement sur la figure 3.

Dans ce second mode de réalisation, le dispositif de liaison 1 réglable comprend la plupart des moyens du mode de réalisation de la figure 2, et ces moyens sont repérés par les mêmes références numériques. On retrouve ainsi l'appareil de liaison 4 ayant un corps de liaison 4a, une extrémité proximale 4b, des seconds moyens de liaison à organe presseur 4d et surface d'appui 4e distale. On retrouve un connecteur d'accrochage 5 à corps de connecteur 5a, doigt de fermeture 5b, zone d'extrémité proximale 5c, zone d'extrémité distale 5d, ouverture latérale 5e et espace intérieur 5f. Par rapport au mode de réalisation de la figure 2, le dispositif de la figure 3 se distingue par le fait que les premiers moyens de liaison 4c sont constitués d'une liaison rigide, formant une continuité entre l'extrémité proximale 4b du corps de liaison 4a et la zone d'extrémité distale 5d du corps de connecteur 5a. Par cette liaison rigide, l'appareil de liaison 4 et le connecteur d'accrochage 5 forment un ensemble unitaire à corps rigide commun formé du corps de liaison 4a et du corps de connecteur 5a.

Ainsi, lors des manoeuvres d'accrochage à un point fixe 2 et à une corde 3, la préhension du corps de dispositif de liaison 1 est facilitée car l'opérateur peut tenir efficacement le dispositif de liaison 1 par l'appareil de liaison 4 lors de l'accrochage du connecteur d'accrochage 5 au point fixe 2, et l'opérateur peut tenir efficacement le dispositif de liaison 1 par le connecteur d'accrochage 5 lors de l'engagement de la corde 3 dans l'appareil de liaison 4. Simultanément, la liaison rigide entre l'appareil de liaison 4 et le connecteur d'accrochage 5 améliore encore l'orientation de l'appareil de liaison 4 autour de l'axe longitudinal I-I.

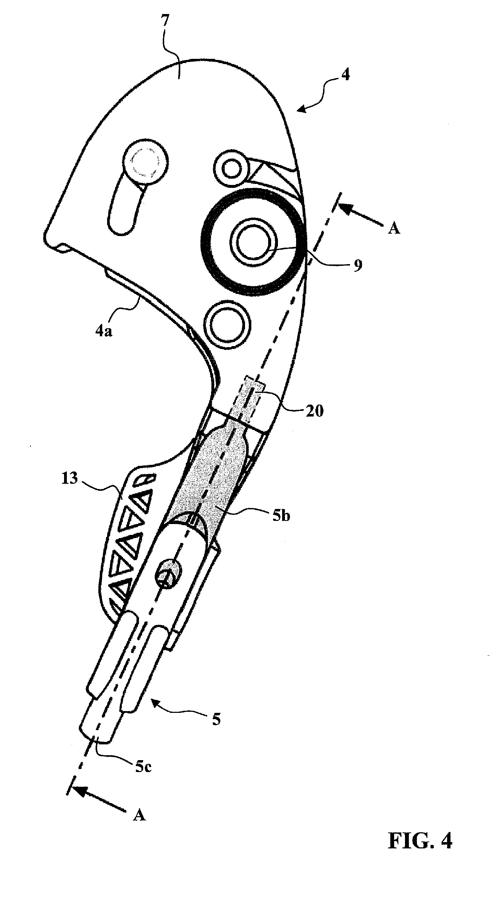

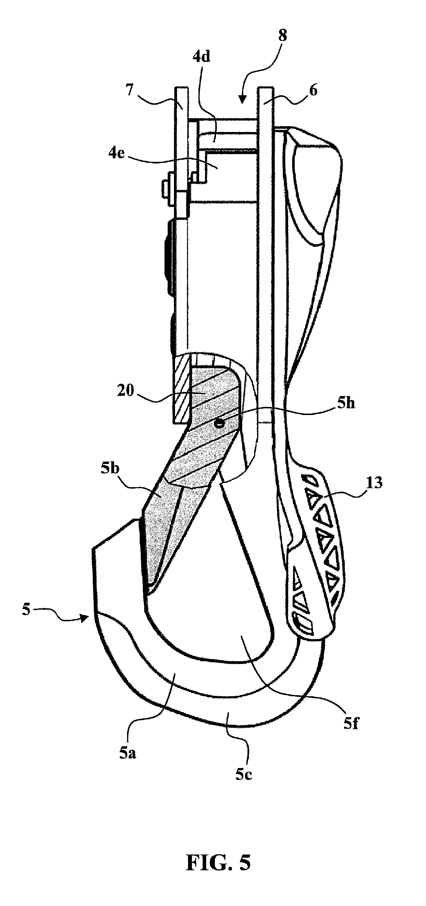

On considère maintenant sur les figures 4 à 8 une première réalisation pratique du second mode de réalisation. On retrouve dans cette première réalisation les éléments essentiels précédemment repérés sur la figure 3, et ces éléments essentiels sont désignés par les mêmes références numériques.

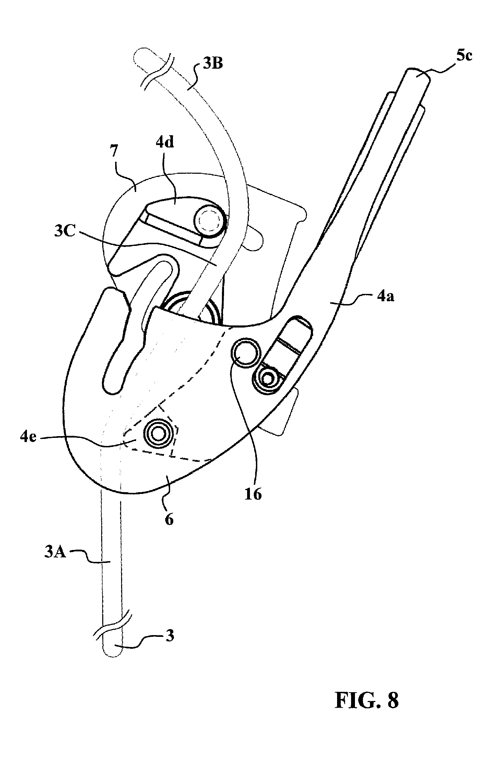

Dans ce cas, le corps de liaison 4a est solidaire d'un premier flasque latéral de guidage de corde 6 et d'une surface d'appui sous forme de nez de freinage 4e rapporté sur le corps de liaison 4a. Le corps de liaison 4a est associé à un second flasque latéral de guidage de corde 7 formant organe de liaison. Les premier et second flasques latéraux de guidage de corde 6 et 7 sont séparés l'un de l'autre par un intervalle transversal de passage de corde 8 s'étendant depuis une entrée de corde 8a jusqu'à une sortie de corde 8b. Le second flasque latéral de guidage de corde 7 est monté mobile sur le corps de liaison 4a entre une position écartée illustrée sur la figure 8 pour la mise en place et l'enlèvement d'une corde 3, et une position fermée illustrée sur les figures 4 à 7 dans laquelle la corde 3 est emprisonnée dans l'intervalle transversal de passage de corde 8.

Les seconds moyens de liaison comprennent un organe presseur sous forme d'une came 4d, engagée entre les premier et second flasques latéraux de guidage de corde 6 et 7, et mobile en rotation autour d'un axe de rotation de came 9 vers et à l'écart du nez de freinage 4e vers lequel elle est repoussée par un ressort de rappel (non représenté).

La came 4d peut être sollicitée à l'écart du nez de freinage 4e par l'action de l'utilisateur sur un levier 13 articulé sur le corps de liaison 4a.

On retrouve dans cette réalisation un connecteur d'accrochage 5 solidaire du corps de liaison 4a, avec un doigt de fermeture 5b articulé sur un corps de connecteur 5a selon un axe d'articulation 5h. Le doigt de fermeture 5b se prolonge au-delà de l'axe d'articulation 5h par un tronçon distal 20. Ainsi, lors de l'ouverture du doigt de fermeture 5b par pivotement vers l'espace intérieur 5f du corps de connecteur 5a, le tronçon distal 20 tend à s'écarter latéralement à l'écart du corps de liaison 4a.

Le second flasque latéral de guidage de corde 7 et le tronçon distal 20 sont agencés de telle sorte que, lorsque le second flasque latéral de guidage de corde 7 est en position fermée assurant l'emprisonnement de la corde 3, le second flasque latéral de guidage de corde 7 est à recouvrement sur le tronçon distal 20 du doigt de fermeture 5b et s'oppose à l'ouverture du doigt de fermeture 5b, assurant ainsi le verrouillage en fermeture du connecteur d'accrochage 5. L'ouverture du doigt de fermeture 5b n'est possible qu'après manoeuvre du second flasque latéral de guidage de corde 7 jusqu'à sa position écartée, dans le sens libérant la corde 3. De la sorte, le second flasque latéral de guidage de corde 7 constitue un organe de liaison qui verrouille le doigt de fermeture 5b en position fermée.

En position écartée illustrée sur la figure 8, le second flasque latéral de guidage de corde 7 autorise l'engagement de la corde 3 dans l'intervalle transversal de passage de corde 8 entre les deux flasques latéraux de guidage de corde 6 et 7 et entre le nez de freinage 4e et la came 4d.

En position fermée illustrée sur les figures 4 à 7, les premier et second flasques latéraux de guidage de corde 6 et 7 interdisent la sortie latérale de la corde 3 à l'écart de l'intervalle transversal de passage de corde 8. Des moyens de verrouillage assurent le verrouillage sélectif du second flasque latéral de guidage de corde 7 en position fermée.

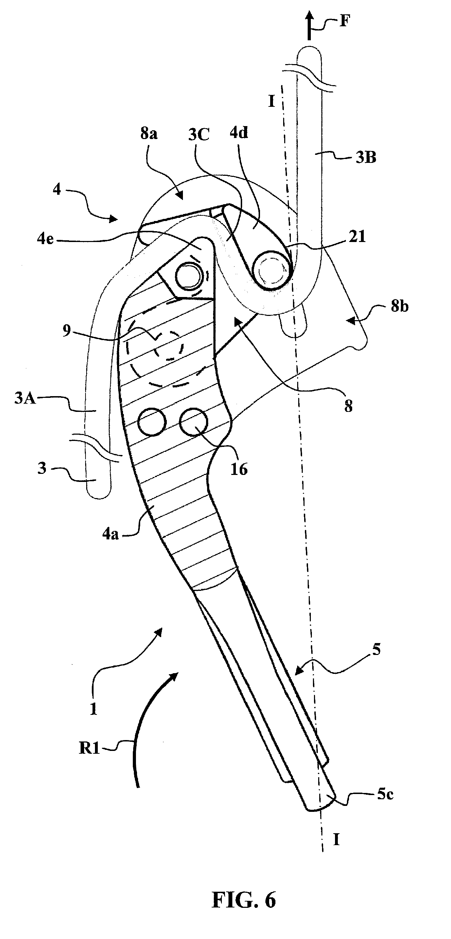

Le fonctionnement est alors illustré en relation avec les figures 6, 7 et 8.

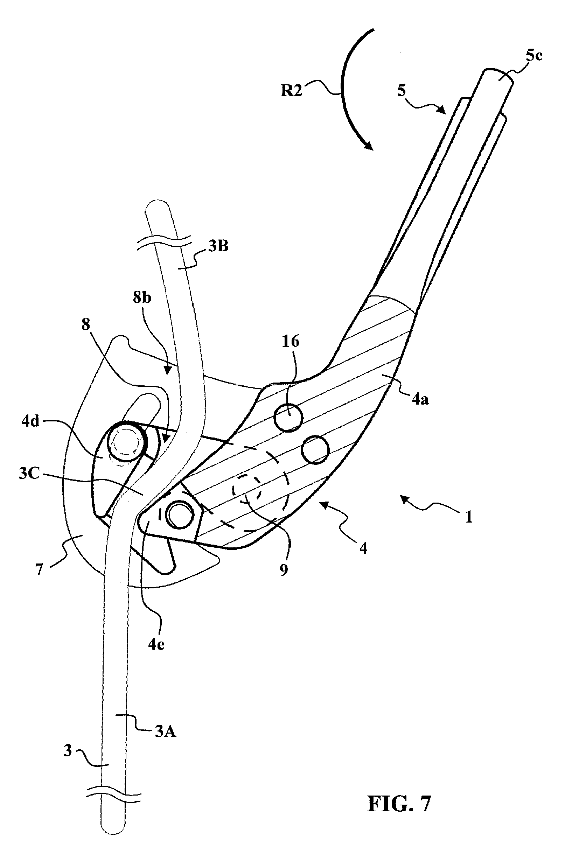

Sur la figure 6, le connecteur d'accrochage 5 est maintenu vers le bas tandis que la tension F du brin de sortie 3B de la corde 3 tire l'appareil de liaison 4 vers le haut (flèche R1), de sorte que l'axe 1-1 passant par la zone d'extrémité proximale 5c et la surface extérieure 21 de la came 4d s'aligne avec le brin de sortie 3B de la corde 3. Dans cette circonstance, la corde 3 fait le tour de la came 4d et du nez de freinage 4e, et tend à pousser la came 4d vers le nez de freinage 4e, provoquant le pincement du tronçon intermédiaire 3C de corde et un blocage efficace de la corde 3. Sur la figure 7, pour relâcher le freinage de la corde 3, on fait pivoter l'appareil de liaison 4 vers le bas (flèche R2), de sorte que la corde 3 ne sollicite plus la came 4d et peut donc coulisser plus librement entre la came 4d et le nez de freinage 4e, le tronçon intermédiaire 3C étant sensiblement aligné avec le brin de sortie 3B et le brin d'entrée 3A de la corde 3. Sur la figure 8, le second flasque latéral de guidage de corde 7 est pivoté en position écartée autour d'un axe de flasque 16, pour autoriser la mise en place ou l'enlèvement de la corde 3.

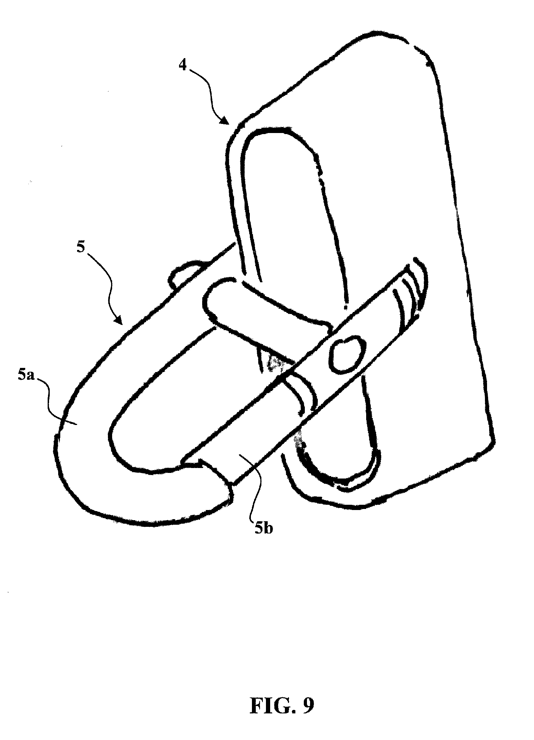

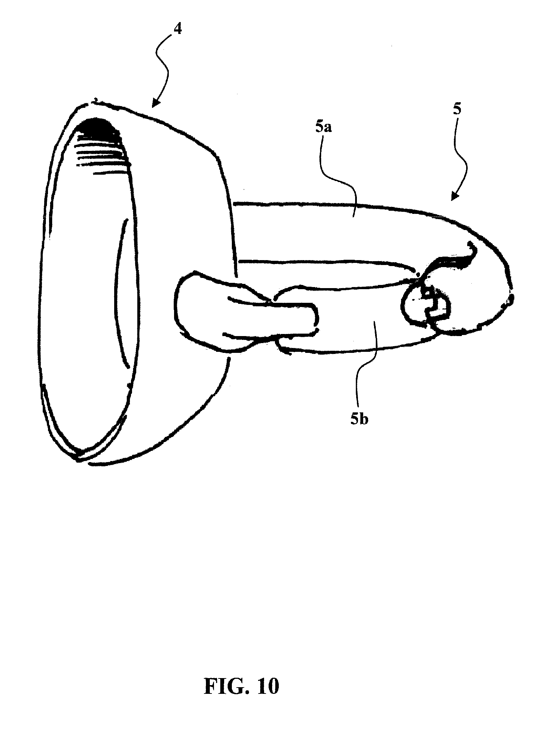

Sur les figures 9 et 10, on a illustré deux autres réalisations pratiques du second mode de réalisation, dans lesquelles l'appareil de liaison 4 est conformé en tube d'assureur pour le passage d'une boucle de corde, et dans lesquelles le connecteur d'accrochage 5 comporte un corps de connecteur 5a monobloc avec l'appareil de liaison 4 et sur lequel s'articule un doigt de fermeture 5b. Un mousqueton, non illustré, fait office d'organe presseur, de façon connue dans les assureurs tubulaires.

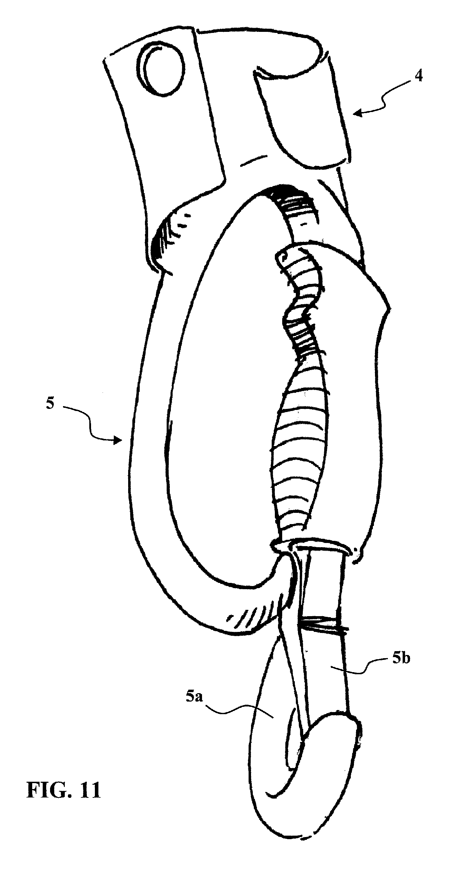

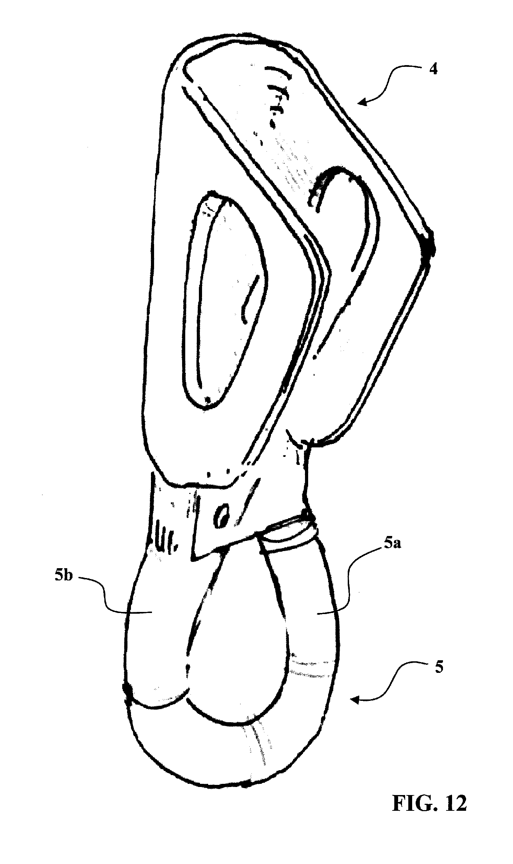

Sur les figures 11 et 12, on a illustré deux autres réalisations pratiques du second mode de réalisation, dans lesquelles l'appareil de liaison 4 est conformé en système de remontée sur corde, et dans lesquelles le connecteur d'accrochage 5 comporte un corps de connecteur 5a monobloc avec l'appareil de liaison 4 et sur lequel s'articule un doigt de fermeture 5b.

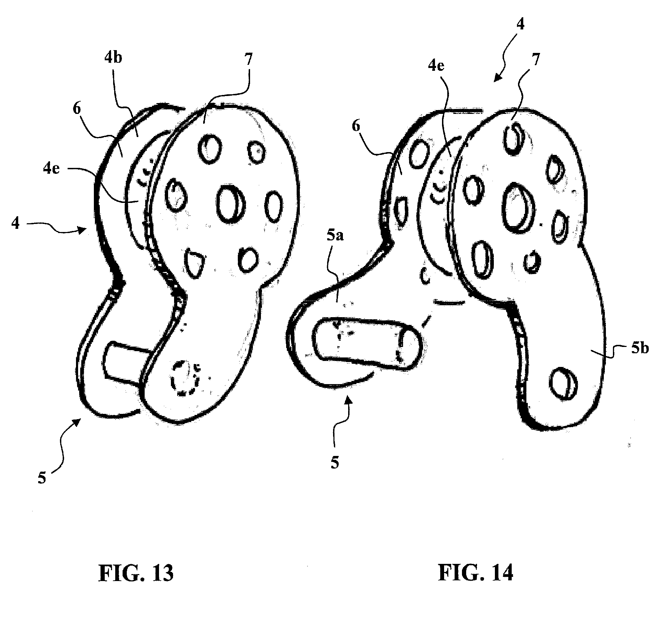

Sur les figures 13 et 14, on a illustré une réalisation pratique du second mode de réalisation, dans laquelle l'appareil de liaison 4 comporte une surface distale 4e en forme de poulie de roulage sur corde, montée entre deux flasques latéraux 6 et 7, le flasque latéral 6 étant solidaire du corps de connecteur 5a, le flasque latéral 7 étant pivotant et solidaire du doigt de fermeture 5b.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de liaison (1) déplaçable et amovible le long d'une corde (3), comprenant :
- un connecteur d'accrochage (5), ayant un corps de connecteur (5a) en anneau ouvert et un doigt de fermeture (5b), le corps de connecteur (5a) ayant une zone d'extrémité proximale (5c) et une zone d'extrémité distale (5d) opposées l'une à l'autre et définissant entre elles une direction de résistance maximale (I) selon laquelle le corps de connecteur (5a) est apte à supporter un effort de traction maximal, le corps de connecteur (5a) ayant entre ses deux zones d'extrémité (5c, 5d) une ouverture latérale (5e) à l'écart de la direction de résistance maximale (I), le doigt de fermeture (5b) étant articulé sur le corps de connecteur (5a) et mobile entre d'une part une position ouverte autorisant le passage vers et hors d'un espace intérieur (5f) du corps de connecteur (5a) par son ouverture latérale (5e) et d'autre part une position fermée s'opposant au passage vers et hors de l'espace intérieur (5f) du corps de connecteur (5a) par son ouverture latérale (5e),
- un appareil de liaison (4), ayant un corps de liaison (4a) dont une extrémité proximale (4b) comporte des premiers moyens de liaison (4c) pour sa liaison au connecteur d'accrochage (5), ayant une surface d'appui (4e) apte à assurer une liaison sur la corde (3), et ayant un organe presseur (4d) mobile et adapté pour presser la corde (3) de façon réglable contre la surface d'appui (4e),
**caractérisé en ce que** :
- l'appareil de liaison (4) est solidarisé en permanence au connecteur d'accrochage (5) et lui est relié par lesdits premiers moyens de liaison (4c),
- lesdits premiers moyens de liaison (4c) sont conformés de façon à assurer en permanence la liaison et l'orientation axiale entre l'extrémité proximale (4b) de l'appareil de liaison (4) et la zone d'extrémité distale (5d) du corps de connecteur (5a).

2. - Dispositif de liaison (1) selon la revendication 1, **caractérisé en ce que** lesdits premiers moyens de liaison (4c) sont une liaison articulée, par laquelle l'extrémité proximale (4b) de l'appareil de liaison (4) est articulée en permanence sur la zone d'extrémité distale (5d) du corps de connecteur (5a).

3. - Dispositif de liaison (1) selon la revendication 1, **caractérisé en ce que** lesdits premiers moyens de liaison (4c) sont constitués d'une liaison rigide entre l'extrémité proximale (4b) du corps de liaison (4a) et la zone d'extrémité distale (5d) du corps de connecteur (5a), par laquelle l'appareil de liaison (4) et le connecteur d'accrochage (5) forment un ensemble unitaire à corps rigide commun formé du corps de liaison (4a) et du corps de connecteur (5a).

4. - Dispositif de liaison (1) selon la revendication 3, **caractérisé en ce que** :
- l'appareil de liaison (4) comprend un organe de liaison (7) articulé sur le corps de liaison (4a) et mobile entre d'une part une position écartée autorisant l'engagement latéral de la corde (3) dans un intervalle transversal de passage de corde (8) et d'autre part une position fermée interdisant la sortie latérale de la corde (3) à l'écart de l'intervalle transversal de passage de corde (8),
- des moyens de verrouillage assurent le verrouillage sélectif de l'organe de liaison (7) en position fermée,
- le doigt de fermeture (5b) du connecteur d'accrochage (5) est sollicité par l'organe de liaison (7), qui le maintient en position fermée lorsque l'organe de liaison (7) est lui-même en position fermée, et qui interdit son déplacement vers sa position ouverte tant que l'organe de liaison (7) est lui-même en position fermée.

5. - Dispositif de liaison (1) selon l'une quelconque des revendications 1 à 4, **caractérisé en ce que** l'appareil de liaison (4) est un descendeur-assureur conformé pour assurer un freinage contrôlé le long de la corde (3).

6. - Dispositif de liaison (1) selon l'une quelconque des revendications 1 à 4, **caractérisé en ce que** l'appareil de liaison (4) est un assureur à corps tubulaire.

7. - Dispositif de liaison (1) selon l'une quelconque des revendications 1 à 4, **caractérisé en ce que** l'appareil de liaison (4) est un système de remontée sur corde.

8. - Dispositif de liaison (1) selon l'une quelconque des revendications 1 à 3, **caractérisé en ce que** l'appareil de liaison (4) comprend une poulie de roulage sur corde (4e).
